(19) Europäisches Patentamt

European Patent Office

Office européen des brevets

(11) **EP 1 736 719 A1**

(12) **EUROPEAN PATENT APPLICATION**

(43) Date of publication:
**27.12.2006 Bulletin 2006/52**

(51) Int Cl.:
***F25B 21/00*** *(2006.01)*

(21) Application number: **05405393.9**

(22) Date of filing: **20.06.2005**

(84) Designated Contracting States:
**AT BE BG CH CY CZ DE DK EE ES FI FR GB GR HU IE IS IT LI LT LU MC NL PL PT RO SE SI SK TR**
Designated Extension States:
**AL BA HR LV MK YU**

(71) Applicant: **Haute Ecole d'Ingénieurs et de Gestion du Canton**
**1400 Yverdon-les-Bains (CH)**

(72) Inventors:
• **Kitanovski, Andrej**
**1000 Ljubljana (SI)**
• **Sari, Osmann**
**1009 Pully (CH)**

• **Gendre, Fabrice**
**1054 Morrens (CH)**
• **Egolf, Peter William**
**5702 Niederlenz (CH)**
• **Derrick, Ata-Caesar**
**1007 Lausanne (CH)**

(74) Representative: **Nithardt, Roland**
**Cabinet Roland Nithardt,**
**Conseils en Propriété Industrielle S.A.,**
**Y-Parc,**
**Rue Galilée 9**
**1400 Yverdon-les-Bains (CH)**

(54) **Continuously rotary magnetic refrigerator or heat pump**

(57)      The invention concerns a rotary magnetic refrigerator/heat pump able to operate in a continuously working process, able to be applied in industrial thermal processes and having a high efficiency and a low cost manufacturing. The rotary magnetic refrigerator (10) comprises a magnet (11), a magnetocaloric ring (12) and a fluid conducting subassembly (13). The fluid conducting subassembly (13) comprises a horizontally positioned rotating disc (14), frame-suspended with bearings (15 and 16) in stationary ducts above (17) and below (18), which serve to supply and evacuate a working fluid (19, 20, 21, 22). The rotating disc (14) has two circular arrays of hollow sectors (23 and 24), one close to each of its planar faces. Every hollow sector (23 and 24) comprises a slot (25 and 26) to the adjacent planar surface and to the circumferential surface of the rotating disc (14). The working fluid is introduced axially into the lower hollow sectors through the openings on the lower planar surface, in order to flow out in radial direction through the circumferential openings of the lower array of hollow sectors and back into the disc through the circumferential openings of the upper array of hollow sectors, from where it finally exits the disc axially through the openings of each hollow sector on the upper planar surface.

FIG. 1A

EP 1 736 719 A1

# FIG. 1B

## Description

## Technical Field

The present invention relates to a continuously rotary magnetic refrigerator or heat pump comprising at least one partially hollow rotating magnetocaloric ring member, at least one magnetic device provided for generating a predetermined magnetic field, said rotating magnetocaloric ring member rotating through the said predetermined magnetic field, and a working fluid conducting subassembly for conducting the said working fluid in and out of the hollow rotating magnetocaloric ring member.

## Background Art

Since Brown GV. [Magnetic heat pumping. US Patent 4,069,028; and Magnetic heat pumping near room temperature. J. App. Phys. 1976, 47, p. 3673-3680] presented the first room-temperature magnetic refrigerator in 1976, a number of "room temperature" refrigerators have been constructed and patented. The concepts of these refrigerators have largely comprised superconducting magnets, which demand enormous investment costs. Since the 1980s, a number of different applications have been proposed. In 2001, the Astronautics Cooperation of America [Zimm CB, Sternberg A, Jastrab AG, Boeder AM, Lawton LM, Chell JJ. Rotating bed magnetic refrigeration apparatus and process, US Patent 5,743,095] reported on the world's first "room temperature" magnetic refrigerator operating with magnets.

Parallel to the development of magnetic refrigerators, the research on magnetocaloric materials suitable for magnetic refrigeration at room temperature has been going on and has been increasing exponentially since the invention of Gadolinium based alloys at AMES Laboratory [Gschneidner Jr. KA, Pecharsky VK. Active magnetic refrigerants based on Gd-Si-Ge material and refrigeration apparatus and process. US Patent 5,743,095, Pecharsky VK, Gschneidner Jr. KA. Effect of Alloying on the Giant Magnetocaloric Effect of Gd5 (Si2Ge2), J. Magnetism and Magnetic Materials 1997, 167, p.179-184]. Among the various magnetocaloric compounds which have been suggested, those worth emphasizing are based on Manganese [Brück E, Tegus O, Li XW, de Boer FR, Buschow KHJ. Magnetic refrigeration-towards room-temperature applications. Physica B 2003, 327, p.431-437; Wada H, Tamabe Y. Giant magnetocaloric effect of MnAs1-xSbx. Appl. Phy. Lett. 2001, Vol. 79, No. 20, p. 3302-3304], because they exhibit a very large magnetocaloric effect. A review on different types of magnetic refrigerators and magnetocaloric materials may be found in the references [Yu BF, Gao Q, Zhang B, Meng XZ, Chen Z. Review on research of room temperature magnetic refrigeration. International Journal of Refrigeration 2003, 26, p.1-15], [Tishin AM, Spichkin YI. The Magnetocaloric Effect and its Applications, Institute of Physics, Series in Condensed Matter Physics, Institute of Physics Publishing 2003] and [Gschneidner KA, Pecharsky VK. Magnetic Refrigeration. Intermetallic Compounds, Principles and Practice, Vol.3, John Wiley&Sons 2002, p.519-539].

In the last decade, the discovery of new magnetic refrigerants-alloys called magnetocaloric materials with high Currie temperatures and giant magnetocaloric effect (MCE) resulted in the development of numerous applications for magnetic cooling. These developments may be the inauguration of alternative cooling technologies, which could drastically influence the application of conventional cooling techniques. In the quest for cooling technologies that do not need the conventional environmentally benign refrigerants, magnetic refrigeration systems could represent an outstanding solution.

Research and development activities of the last twenty years have brought about numerous magnetic refrigerators which operate with a variety of magnetocaloric materials and in different thermodynamic cycles. So far, most magnetic refrigerators function according to the principle of a magnetocaloric material moving through a magnetic field by reciprocating or rotating motion. The majority of early scientific publications refers to the use of superconducting magnets for inducing the temperature change of the magnetocaloric material due to its magnetocaloric effect. Recently the Astronautics Cooperation of America (C.B. Zimm , A. Sternberg , A.G. Jastrab, A.M. Boeder, L.M. Lawton, J.J. Chell Rotating bed magnetic refrigeration apparatus, US Patent 6,526,759, 2003) reported on the construction of the world's first "room temperature" magnetic refrigerator operating with permanent magnets.

Permanent magnets have significant advantages when compared to superconducting or conventional electro-magnets. Contrary to electro-magnets, no external power is needed to generate the magnetic field and no heat is generated by dissipation of electric energy. Superconducting magnets, together with a dewar, are excessively costly, and their application in magnetic refrigeration would undermine the competitiveness of this technology. The possibility of running regeneration cycles and cascade systems when using existing magnetocaloric materials allows even the use of permanent magnets with low magnetic fields. Permanent magnets with very high magnetic fields are also being developed progressively (see K.H. Müller , G. Krabbes , J. Fink, S. Gruss , A. Kirchner , G. Fuchs , L. Schultz, New permanent magnets, Journal of Magnetism and Magnetic Materials 2001, 226-230, p. 1370-1376 and Kumada M., Iwashita Y., Antokhing E.A., Issues with permanent magnets. NANOBEAM 2002, Lausanne, Switzerland, Conference web-proceedings), so it appears legitimate to predict that future magnetic refrigerators operating near room temperatures will comprise permanent magnets. An extensive review on existing magnetic refrigeration technologies may be found in the book of Tishin (A.M. Tishin, Y.I. Spichkin, The Magnetocaloric Effect and its Applications, Institute of Physics, Series in Condensed Matter Physics, Institute of Physics Publishing 2003) or in the paper of Yu et al. (Yu B.F., Gao Q., Zhang B., Meng X.Z., Chen Z., Review on research of room temperature magnetic refrigeration. International Journal of Refrigeration 2003, 26, p.1-15).

A prior art device is disclosed in US 3,108,444 in which the magnetocaloric material forms a ring rotating through two baths, e.g. a heat source bath and a heat sink bath. In this patent the ring rotates through two baths, e.g. heat source bath and heat sink bath. Another device is disclosed by the Japanese publication JP2001-090953 in which the magnetocaloric material is contained in small chambers and the magnet moves. A further device is disclosed in the publication W003050456 wherein the magnet moves and additional valves and special switches are needed to provide the flow of the working fluids through the magnetocaloric material.

Another device is disclosed by the PCT application W00212800 wherein the working fluid is directed to and from the regenerator beds (which together comprise a magnetocaloric ring) by a distribution valve which is connected by conduits to the hot and cold ends of the beds and which rotates with the ring. A limited number of conduits is used for distributing the working fluids, the conduits are connected to the magnetocaloric ring in such a way that the flow is circumferential through the bed and various valves are needed.

## Disclosure of Invention

To overcome the above drawbacks of the prior art devices, an objective of the present invention is to provide a rotary magnetic refrigerator/heat pump (RMR/RMHP), able to operate in a continuously working process, able to be applied in industrial thermal processes, HVAC systems, refrigerators, heat pumps, automobiles, trains, planes and spacecrafts, having a high efficiency and a low cost manufacturing.

The rotary magnetic refrigerator or heat pump of the present invention such as defined in the preamble is characterized in that the working fluid conducting subassembly comprises a central rotating disk for supporting the said partially hollow rotating magnetocaloric ring member which comprises at least two hollow sectors having respectively one inlet and one outlet and means to communicate with hollow sectors of the said partially hollow rotating magnetocaloric ring member.

The fluid conducting subassembly advantageously comprises a horizontally positioned rotating disc being frame-suspended with bearings in stationary ducts above and below.

In a preferred embodiment, the magnetocaloric ring member comprises at least one fluid flow separator and the said rotating disc comprises at least one fluid flow separator which provides flow of at least one fluid in and out of the rotating magnetocaloric ring member which is attached to the rotating disc.

The continuously rotary magnetic refrigerator or heat pump according to the invention preferably comprises stationary ducts attached to a casing containing the said rotating magnetocaloric ring member and the said rotating disc. These stationary ducts comprise minimum one fluid flow separator.

The magnetocaloric ring may be made of at least one magnetocaloric material or may be layered with different magnetocaloric materials in a direction of a temperature gradient.

The magnetocaloric material may be performed as a porous structure, packed bed, as periodic structure.

In a variant of embodiment of the continuously rotary magnetic refrigerator or heat pump comprising more than one partially hollow rotating magnetocaloric ring member and at more than one magnetic device provided for generating a predetermined magnetic field providing a cascade system having several stages, each stage comprise different magnetocaloric material and/or may be also layered in a direction of a temperature gradient.

Preferably, a highly magnetic permeable fluid is inserted between magnetocaloric ring member and a housing in order to decrease the effect of a gap.

## Brief Description of Drawings

Figure 1A is a cross-sectional view showing a first embodiment of a single stage rotary magnetocaloric refrigerator or heat pump according to the invention,

Figure 1 B is a top view showing the rotary magnetocaloric refrigerator or heat pump of Figure 1A,

Figure 2 is a partial view showing a second embodiment of a rotary magnetocaloric refrigerator or heat pump according to the invention,

Figures 3A, 3B and 3C show possible arrangements of multiple magnets,

Figure 4A is a top view of a rotating disk with the magnetocaloric ring attached thereto of a single stage rotary magnetocaloric refrigerator or heat pump according to the invention,

Figure 4B is a cross-sectional view cut along line A-A of Figure 4A,

Figure 4C is a cross-sectional view cut along line B-B of Figure 4A,

Figures 5A, 5B, 5C and 5D show some examples of different shapes of flow separators located inside of the said rotating magnetocaloric ring member and said central rotating disk,

Figures 6A and 6B are respectively a cross-sectional view and a top view showing the stationary duct of the rotary magnetocaloric refrigerator or heat pump similar to that of Figure 1,

Figure 7 is a cross-sectional view showing a third embodiment of a single stage rotary magnetocaloric refrigerator or heat pump with a housing containing a permeable fluid according to the invention,

Figure 8 is a partial cross-sectional view showing a fourth embodiment of a single stage rotary magnetocaloric refrigerator or heat pump according to the invention,

Figure 9 is a diagram showing the Brayton cycle and partial views representing components of the single stage rotary magnetocaloric refrigerator or heat pump according to the invention,

Figure 10 is a diagram showing one approach of the Ericsson thermodynamic cycle and partial views representing components of the single stage rotary magnetocaloric refrigerator or heat pump according to the invention,

Figure 11 is a diagram showing another approach of the Ericsson thermodynamic cycle, ,

Figure 12 is a diagram showing one approach of the Carnot cycle,

Figure 13 shows another approach of the Carnot cycle,

Figure 14 is a cross-sectional view showing a cascade system comprising three rotary magnetocaloric refrigerators or heat pumps according to the invention,

Figure 15A represents a Brayton cycle with a single regeneration system applied to a rotary magnetocaloric refrigerator or heat pump according to the invention,

Figure 15B represents a Brayton cycle with a multiple regeneration system applied to a rotary magnetocaloric refrigerator or heat pump according to the invention,

Figure 16 represents a one pump solution with connections between certain segments of a static conduit, and

Figure 17 represents a diagram corresponding to the solution of Figure 16A.

**Modes for carrying out the Invention**

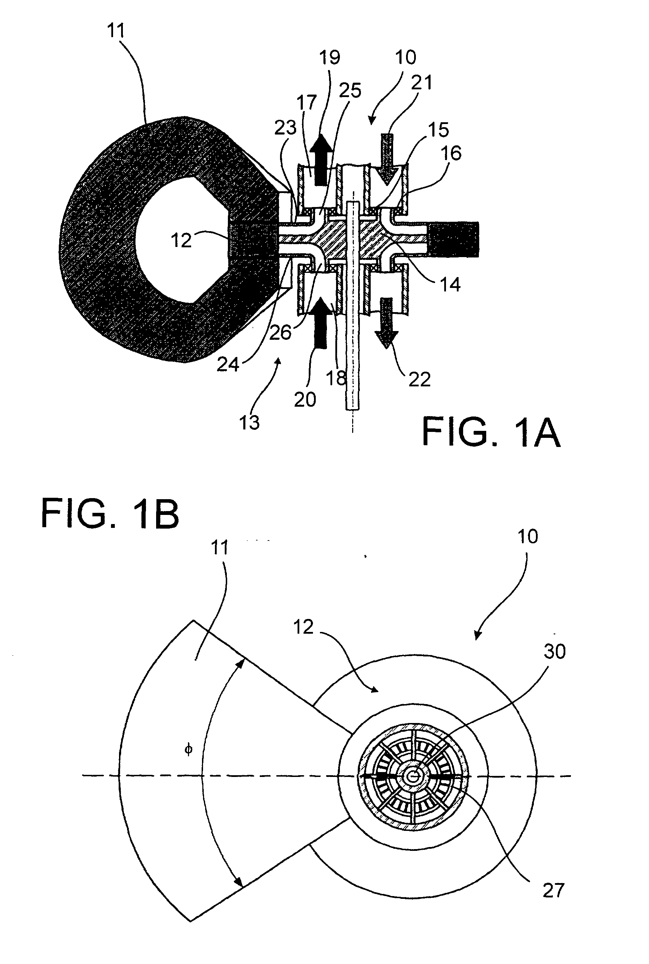

Figures 1A and 1B show a schematic design of the rotary magnetic refrigerator 10 in its simplest configuration with the main structural components. The functionality of this refrigerator is based on three main functional subgroups and on a minimum of one working fluid. Preferably two working fluids e.g. heat source and heat sink fluid are used and they may be gases, liquids, nanofluids or suspensions. The three functional subgroups are the magnet 11, the magnetocaloric ring 12 and the fluid conducting subassembly 13. The fluid conducting subassembly 13 comprises a horizontally positioned rotating disc 14, frame-suspended with bearings 15 and 16 in stationary ducts above 17 and below 18, which serve to supply and evacuate the working fluid or working fluids designated by the arrows 19, 20, 21 and 22. The rotating disc 14 has two circular arrays of hollow sectors 23 and 24 in its interior, one close to each of its planar faces. Every hollow sector 23 and 24 has an opening slot 25 and 26 to the adjacent planar surface and to the circumferential surface of the rotating disc 14. This allows for the working fluid to be introduced axially into the lower hollow sectors through the openings on the lower planar surface, then for the fluid to flow out in radial direction through the circumferential openings of the lower array of hollow sectors and back into the disc through the circumferential openings of the upper array of hollow sectors, from where it finally exits the disc axially through the openings of each hollow sector on the upper planar surface. If there are two or more working fluids, they may flow in the same direction or in opposite direction (e.g. in Fig. 1 the arrows show the case, where heat source and heat sink fluid are flowing in opposite direction). The exchange of fluid in azimuth direction, which is the direction of rotation in the interior of the disc, is undesirable and prevented by the separators 27 of adjacent hollow sectors. The number of hollow sectors in the rotating disc depends on the application of the refrigerator. The separators 27 may be heat insulated, if necessary. Flow separators are also mounted in the magnetocaloric ring 12, and may be made of magnetocaloric material as well. Flow separators are also present in the stationary ducts. The number of flow separators, as well as their geometry in the magnetocaloric ring 12, in the rotating disc 14 and in the stationary ducts 17 and 18 depends on the specific application of the refrigerator or heat pump. The rotating disc 14 is rotated by a driving axle at its centre 30. Attached to the circumferential surface of the rotating disc 14 is the magnetocaloric ring 12, which rotates with the disc. This ring comprises a magnetocaloric material in form of either a packed bed of grains or a porous or periodic structure. The magnetocaloric ring 12 also has flow separators for preventing fluid flow in azimuth direction. The working fluid exiting the lower or upper, (depending on a direction of the fluid flow) array of hollow sectors of the rotating disc 14 through the interface to the magnetocaloric ring, flows into the voids of the magnetocaloric material, from where it returns to the upper (or lower) array of hollow sectors of the rotating disc 14 through the circumferential surface. The magnet 11 is stationary. It may be conceived to deliver a constant or an altering magnetic field, depending on the application of the refrigerator. The angular range of the magnetocaloric ring 12 which is covered by the magnet may vary depending on the specific application of the refrigerator.

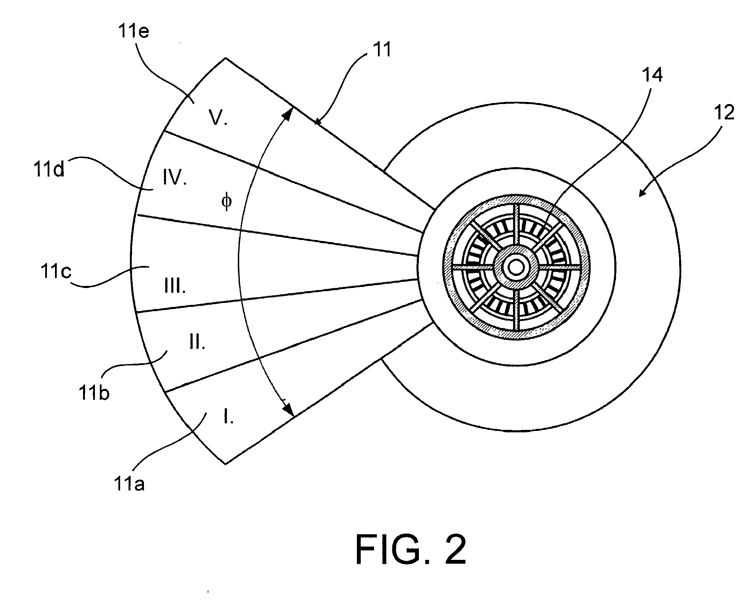

Figure 2 shows an example of a magnet 11 or package of multiple magnets 11 a, 11 b, 11c, 11 d and 11e conceived to deliver a uniform or a stepwise incrementing magnetic field.

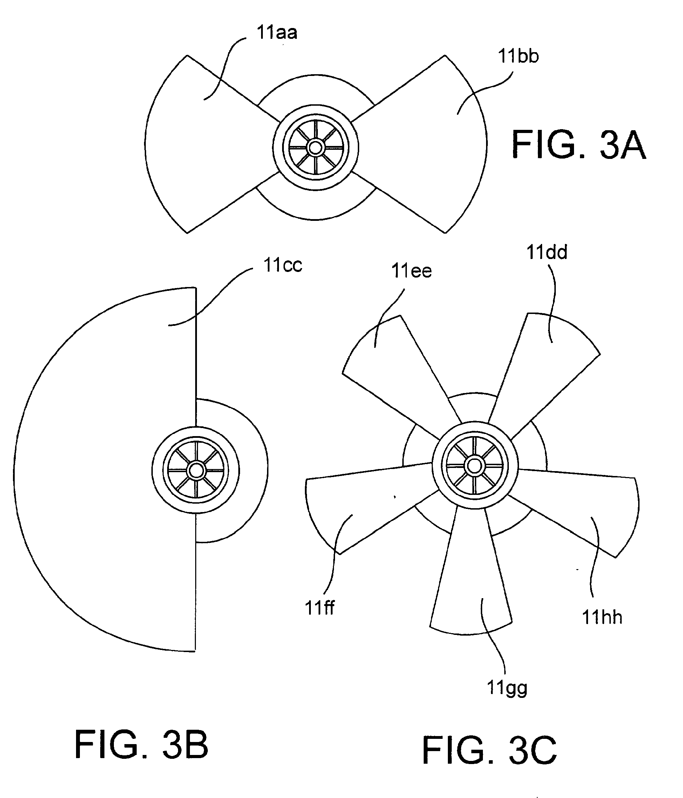

Figures 3A, 3B and 3C show some possible arrangements of additional magnets: Two symmetrical magnets 11aa and 11bb in Figure 3A, a single magnet 11cc with an angular extension of 180° in Figure 3B and five magnet sectors 11dd, 11ee, 11ff, 11gg and 11hh in Figure 3C.

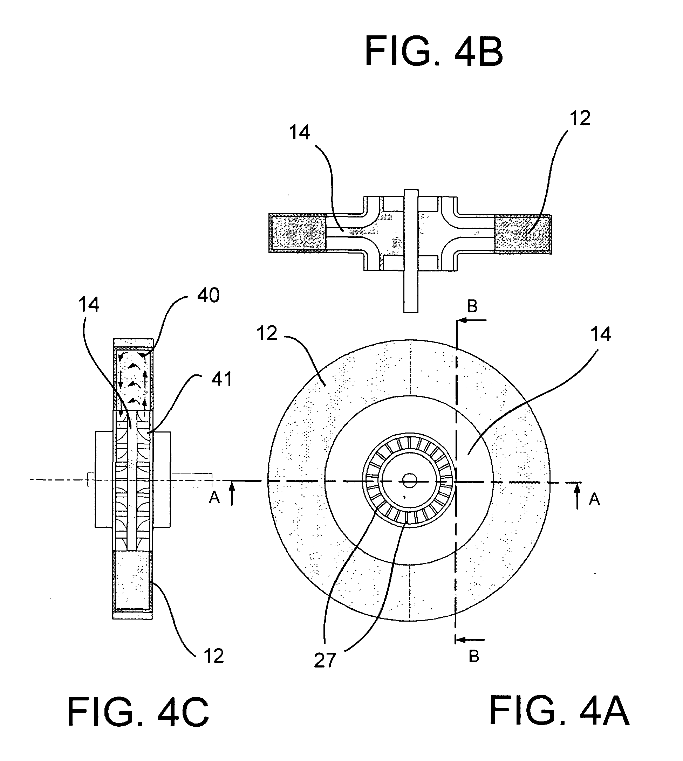

Figures 4A, 4B and 4C show the rotating disc 14 with its interior structure attached to the magnetocaloric ring 12. The black arrows 40 in Figure 4C, cross section view along line B-B show the flow of working fluid through the structure of the magnetocaloric ring 12. The rotating disc 14 and the flow separators 27 may be made of any kind of material, but preferably of a material with low heat conductivity. In a special case, the flow separators 27 may be heat insulated. The flow separators 27 may be of different shapes. In a special case, they may be shaped as the blades used in pumps or turbines. The housing surrounding the magnetocaloric ring 12 may be made of any kind of material, but preferably of a magnetocaloric material. The flow separators 27 may have different kinds of shapes. These shapes may differ between the separators 41 in the magnetocaloric ring, in the rotating disc or in the stationary ducts. The shape of the separators in each of these subassemblies should be selected according the specific application of the refrigerator or the heat pump.

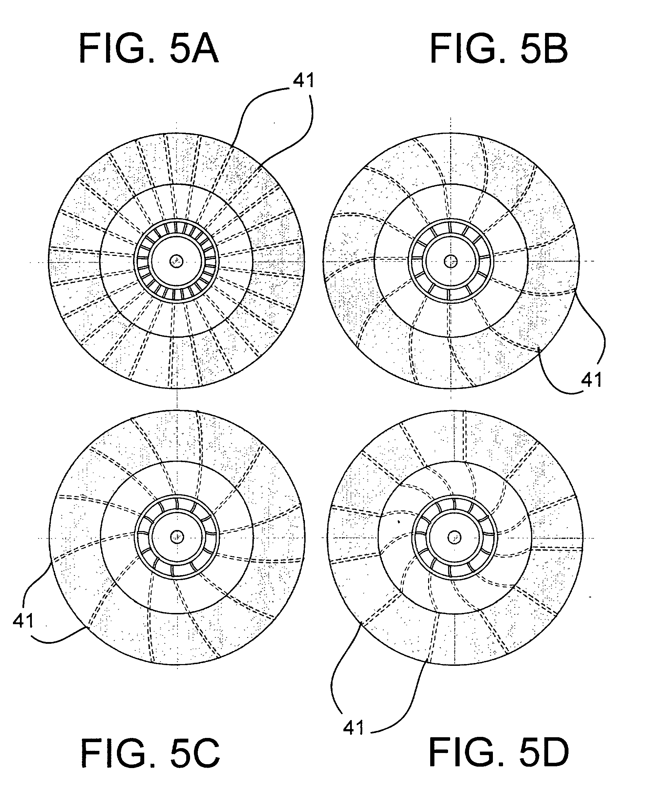

Figures 5A, 5B, 5C and 5D show some examples of different shapes of flow separators 41 in the magnetocaloric ring and in the rotating disk. The shapes of the flow separators in the lower part of the rotating disk may differ from those in the upper part of the rotating disk. This is also valid for the stationary ducts.

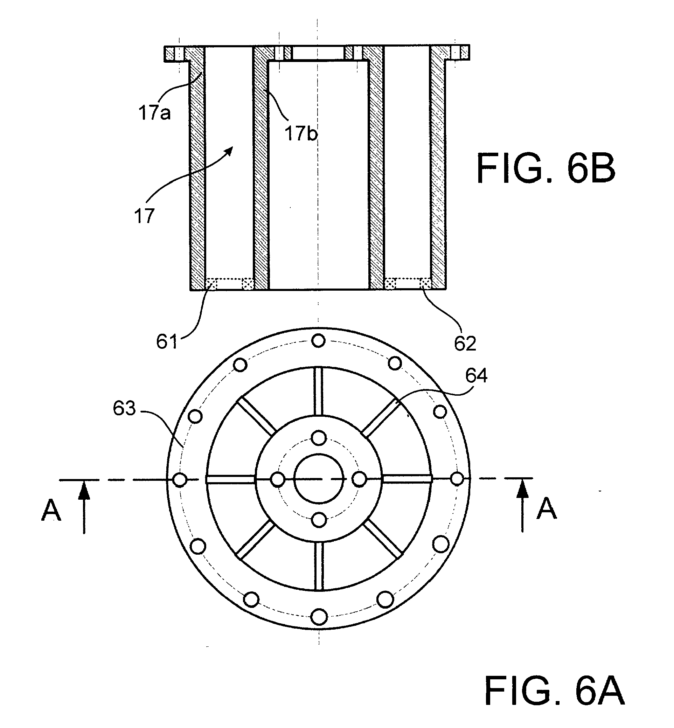

The stationary ducts 17 and 18 shown in Figure 1A are presented in more detail in Figures 6A and 6B. One end of each stationary duct is provided with bearings 61 and 62 including seals in which the rotating disc 14 is mounted. With this, both ducts 17, 18 remain at rest while the disk with magnetocaloric ring 14 rotates. The stationary ducts 17, 18 comprise flanges 63 for attaching them to an external piping system. The stationary ducts 17, 18 may be made of any kind of material, but preferably of one with very low thermal conductivity. They may be also heat insulated. The flow separators 64 in the stationary ducts generally prevent fluid flow in the azimuth direction and therefore also prevent the mixing of the heat source and heat sink fluids or prevent mixing of fluid at different temperature levels. The concept of the flow separators 64 also simplifies the possible modification of the refrigerator to a regeneration system. The flow separators 64 may have different shapes, depending on the specific application of the refrigerator and on its operating characteristics. The external duct 17a and internal duct 17b form a coaxial set of ducts together, with the working fluid (s) flowing in the space between them. The assembly of the rotating disc 14 and the stationary ducts 17, 18 requires a gap at the interface between the flow separators in the stationary ducts and the planar surfaces of the extensions of the rotating disc 14. Through this gap, some amount of the fluids in the individual sectors of the stationary ducts 17, 18 could leak to the neighbouring sectors in azimuth direction. This is undesirable and may be avoided either by dimensioning the gap to the minimum necessary to prevent the touching of rotating and stationary parts, or by applying an adequate sealing device which can ensure minimal leakage through the gap between the rotating and stationary parts, or by an adequately designed geometry of the flow separators at the interface between the rotating disc 14 and stationary ducts 17, 18.

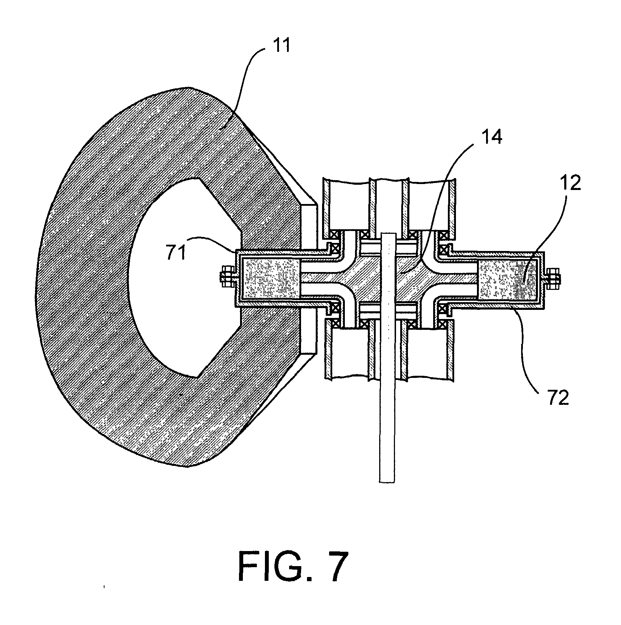

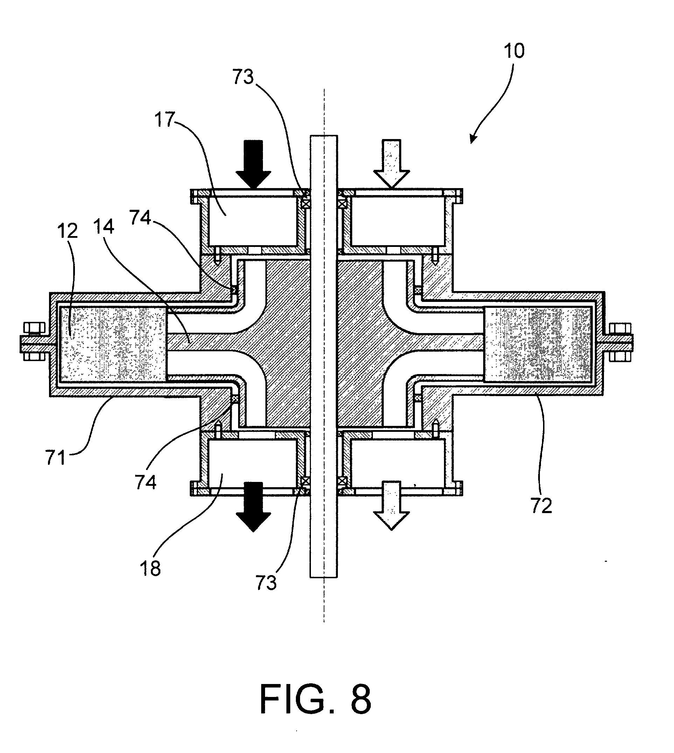

Different designs of the refrigerator shown in Figures 1A and 1B are presented in Figures 7 and 8. In both designs, the rotating disc 14 with the magnetocaloric ring 12 is enclosed in a housing 71 and 72, which is stationary and attached to the magnet poles of the magnet 11. The part of the housing, which is attached to the magnet poles, consists of a highly permeable material, while the other part may be made of any kind of material, but preferably one with very low magnetic permeability. With this, the magnetic flux lines are directed solely through the part of the magnetocaloric ring which must be magnetized. In the gap between the housing and the rotating magnetocaloric ring, a highly permeable fluid is contained, with the purpose of decreasing the adverse effect of the gap on magnetization of the ring. Inevitably, the relative motion between the rotating disc 14 and the stationary housing 71, 72 may cause the permeable fluid between these parts to rotate and mix its "warm" and "cold" regions. This may be prevented by fastening seals to the interior planar surface of the housing at adequate locations or the permeable fluid may be used also a sealing component, captured in a magnetic field.

Figure 8 shows the rotary magnetic refrigerator 10 with the rotating disc 14 and the magnetocaloric ring 12 located in the housing 71, 72 and suspended with bearings 73 in the working fluid ducts 17, 18. Seals 74 are provided between the rotating disk 14 and the housing 71, 72. This design is characterized by the facility of manufacturing and assembling the parts and therefore permits to reduce the expenses.

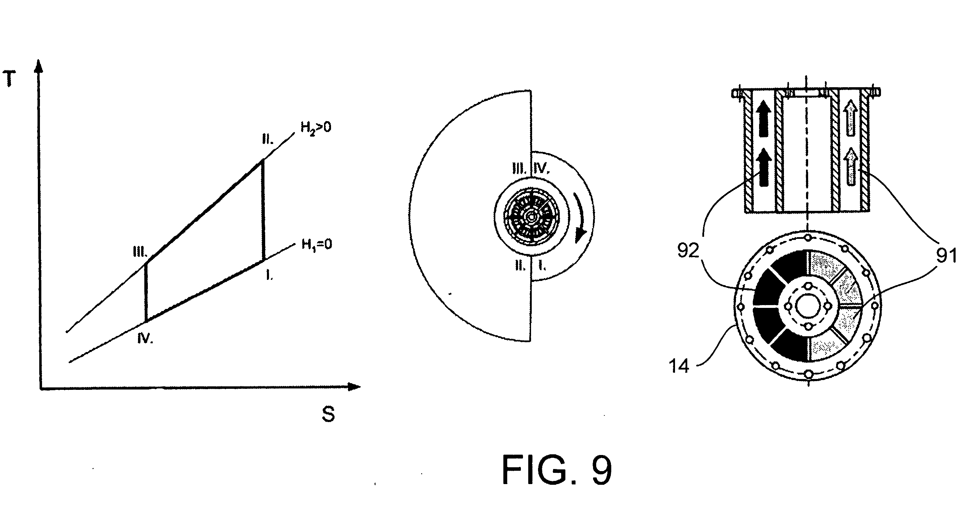

Considering the configuration in Figure 3B, with the magnetic field assumed to be uniform, the four relevant stages of operation are numbered in the schematics of the refrigerator to the right in Figure 9. The T-S-diagram on the left in Figure 9 shows, qualitatively, the corresponding thermodynamic cycle, which the magnetocaloric material undergoes during these four stages of operation. It is assumed a Brayton cycle operating between two isofields (constant magnetic fields) and two adiabats. From position IV. to position I., the working fluid that is the heat source fluid 91 flowing through the voids in the part of the magnetocaloric ring, which is not subjected to the magnetic field, brings heat to that part of the ring. In the process, the temperature of the magnetocaloric material rises, while that of the heat source working fluid drops. As the magnetocaloric ring rotates, it enters the zone where the magnet is situated. Upon entering this zone of constant magnetic field (from position I. with $H_1$ = 0, to II. with $H_2 > H_1$), the magnetocaloric material subjected to the magnetic field undergoes adiabatic magnetization and is heated up due to the magnetocaloric effect. From position II. to position III., the working fluid that is the heat sink fluid 92 flowing through the voids in the part of the magnetocaloric ring, which is subjected to the magnetic field, absorbs heat from that part of the ring. In the process, the temperature of the magnetocaloric material drops, while that of the heat sink working fluid rises. In the case of Figure 9, both working fluids 91 and 92 are flowing in the same direction, but counter current flow is also possible. With special arrangement of piping, also a one fluid solution is possible. Upon exiting the zone of constant magnetic field and entering the zone without magnetic field (from position III. to IV.), the magnetocaloric material undergoes adiabatic demagnetization and is cooled down due to the magnetocaloric effect. The necessary external piping system for the working fluids is attached to the stationary ducts below and above the rotating disc 14.

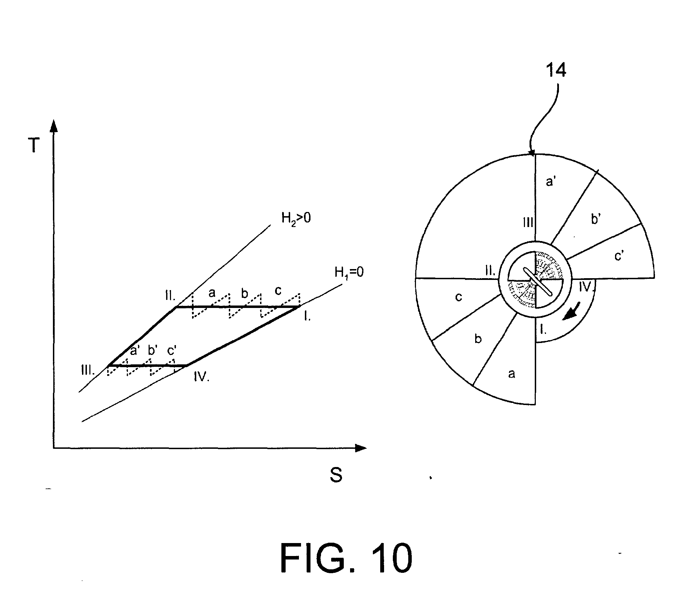

In order for the magnetocaloric material to undergo an Ericsson thermodynamic cycle during the four stages of operation, the system should operate between two isofields and two isotherms represented by Figure 10. This means isothermal magnetization (I. to II.) and isothermal demagnetization (III. to IV.). Isothermal magnetization requires the magnetocaloric ring to pass through subsequent zones of incrementing magnetic field (or requires a process of magnetization at constant temperature), while isothermal demagnetization requires the magnetocaloric ring to pass through subsequent zones of decreasing magnetic field (or requires a process of demagnetization at constant temperature). For the case of the Figure 10, we will consider that isothermal magnetization and demagnetization are performed by use of incrementing magnetic field by application of more than one magnet. To the right in Figure 10, the four relevant stages of operation are numbered in the schematics of the refrigerator. The T-S-diagram on the left in Figure 10 shows, qualitatively, the corresponding Ericsson thermodynamic cycle, which the magnetocaloric material undergoes during the four stages of operation. As the magnetocaloric ring 14 rotates, it enters the zone where the first magnet (sector a) is situated. Upon entering this zone, the magnetocaloric material subjected to the magnetic field undergoes adiabatic magnetization and is heated up due to the magnetocaloric effect. The magnetic field increases in each subsequent sector till position II (sectors b, c and II. to III.). Consequently, upon entering the magnetic field of each sector, the magnetocaloric material is heated up due to the repeated adiabatic magnetization and magnetocaloric effect. This may be achieved with multiple magnets. As the magnetocaloric ring 14 passes through these sectors of incrementing magnetic field, the heat sink working fluid flowing through the voids in these parts of the magnetocaloric ring extracts heat from the magnetocaloric material. In the process, the temperature of the magnetocaloric material is decreased in each sector of magnetization, while that of the heat sink working fluid rises. With this procedure, over a certain zone, the magnetocaloric material may be kept at a somewhat constant mean temperature, despite an increasing magnetization of the material. This temperature represents the hot side temperature level of the refrigerator.

In the subsequent section II. to III., the heat sink working fluid, which is kept in the volume of the magnetocaloric material, is pumped to the section IV. to I. in order to perform an internal regeneration cycle. Simultaneously, the heat source fluid which is kept in the volume of the, magnetocaloric material in the section IV. to I., is pumped to the section II. to III for the internal regeneration process. The transport mechanism to exchange fluids for the regeneration is chosen according to the fluid(s) used and the specific application of the refrigerator. From the cycle state III to IV., the magnetic field decreases in each subsequent sector till position IV (sectors a', b' and c'). Upon entering the magnetic field of each sector, the magnetocaloric material is cooled down due to the repeated demagnetization and magnetocaloric effect. As the magnetocaloric material passes through these sectors of decreasing magnetic field, the heat source working fluid flowing through the voids in these parts of the magnetocaloric ring, releases heat to the magnetocaloric material. In the process, the temperature of the magnetocaloric material rises in each sector of demagnetization, while that of the heat source working fluid decreases. With this procedure, over a certain zone, the magnetocaloric material may be kept at a somewhat constant mean temperature, despite the demagnetization of the material. This temperature represents the cold side temperature level of the refrigerator.

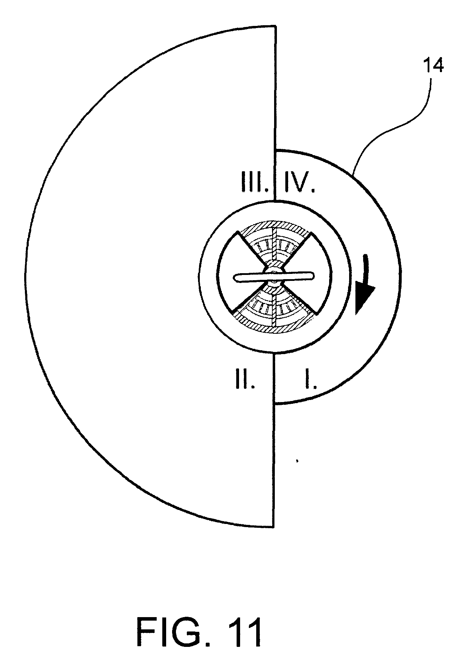

Another possibility of performing an Ericsson cycle with the isothermal magnetization is represented by the Figure 11 (I. to II.), and demagnetization (III. to IV.) where the heat sink fluid enters a part of magnetocaloric ring, just before magnetocaloric ring 14 enters the magnetic field and a part of the magnetocaloric ring 14, just after the magnetocaloric ring 14 entered the magnetic field. In the same way, the heat source fluid passes through the magnetocaloric ring 14 just before it exits magnetic field and the part of magnetocaloric ring, just after the magnetocaloric ring 14 exits magnetic field.

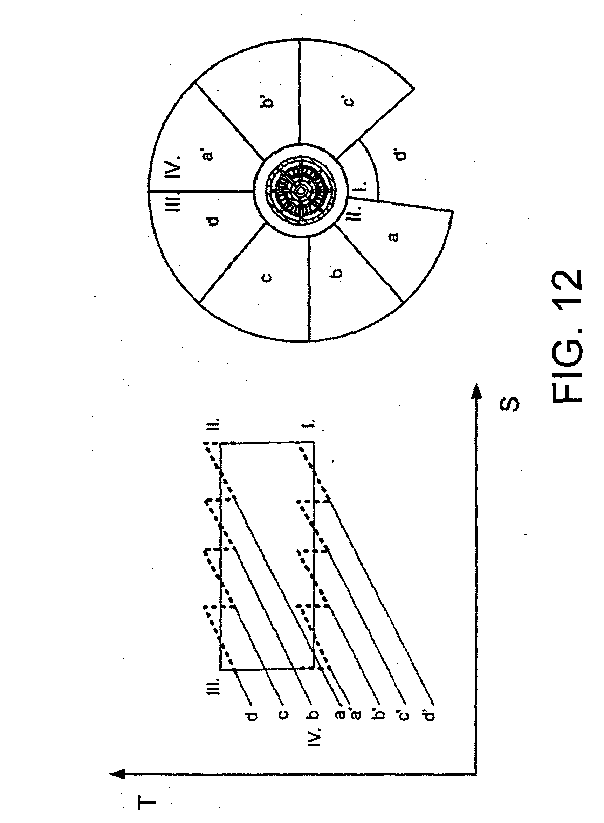

In order for the magnetocaloric material to undergo a Carnot thermodynamic cycle during the four stages of operation, the system should operate between two isotherms and two adiabats as shown by the Figure 12. The process which the magnetocaloric material undergoes is similar to the one for the Ericsson cycle, with the exception of no zones of regeneration for the Carnot cycle. The "hot" and "cold" temperature levels of the cycle are produced by adiabatic magnetization (I. to II.) and demagnetization (III. to IV.) respectively.

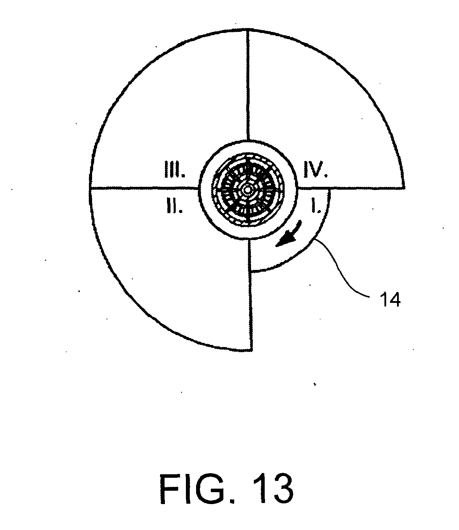

Similar as for the case in a Figure 11, the Carnot cycle may be performed as shown in the Figure 13. In this case, zones, where roman numbers are placed present a uniform magnetic field (or zero field in the case of zone I.). Heat source fluid in this case is brought to zones IV. and I. simultaneously and heat sink fluid is brought to zones II. and III. simultaneously. Between III. and IV. and I. and II., the adiabatic demagnetization and adiabatic magnetization respectively occur.

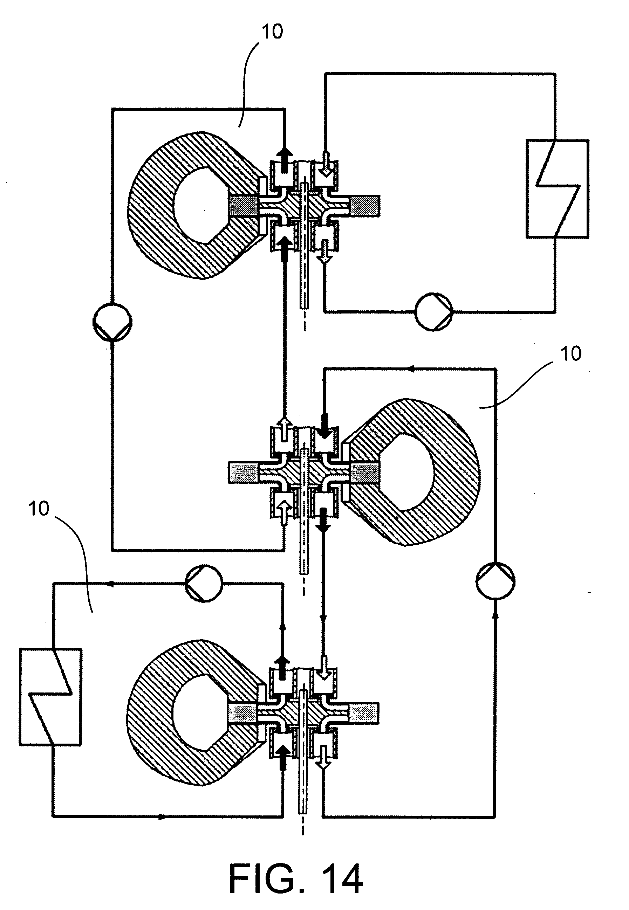

All the design and cycle possibilities presented in this paper may be modified to be used in cascade systems as shown in Figure 14, in multi stage systems, in systems with regeneration or in combinations of these. In a cascade system two or more magnetic refrigerators 10 are combined in a way that the heat source fluid leaving the "cold" side of one refrigerator serves as the heat sink fluid entering the "hot" side of the second refrigerator. Different magnetocaloric materials may be used in each of stages. Such systems are well known in conventional cooling techniques. However, when using magnetic refrigerators, there is no need for the working fluid to pass through intermediate heat exchangers as happens in the evaporator of the higher stage and condenser of the lower stage in conventional cascade systems. In a multi stage system, the magnetic refrigerators are connected in a parallel manner to increase the cooling power.

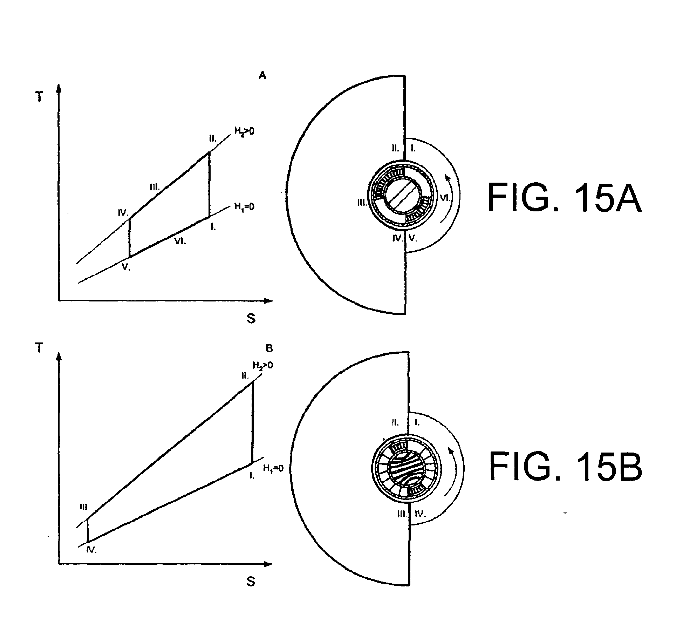

In systems with regeneration as shown by the Figures 15A and 15B, the working fluid is transported to the part of the magnetocaloric material which is outside the magnetic field from the part of the magnetocaloric ring which is in (or in the lower) magnetic field. And vice versa, the working fluid is transported from the part of the magnetocaloric material outside the or in the lower magnetic field to the part of magnetocaloric ring, which is in the magnetic field. This allows an increase in the difference of the temperature levels of the refrigerator. The Brayton cycle with regeneration shown in Figure 15B operates between two isofields that is constant magnetic fields and two adiabats, as was described for the Brayton cycle in Figure 9. Compared to the Brayton cycle without regeneration presented in Figure 9, the one with regeneration exhibits a larger difference in the temperature levels of the "cold" side and the "hot" side of the refrigerator. The means of conveying the working fluids for the regeneration through the conduits is chosen according to the fluids used and the specific application of the refrigerator. In order to perform a regeneration process, and therefore increase the temperature difference between heat source and heat sink, only a small part of the device may serve as heat sink or heat source. In this case, the hot source fluid is flowing from the hot source through the rotating disk and attached magnetocaloric ring and exists on the other side of device, back to the hot source. The same operation is performed by the heat sink fluid, at another location of device. Other parts are closed and connected by piping between them. This means, that a fluid from the cold segment (just after the part where a heat source is applied) is flowing to the warm segment (just before the part where a heat source is applied) and so on. The flow of fluids for performing regeneration between segments may be performed by various means.

A device as in Figures 15A and 15B will require more than one pump to pump the fluids through different sections. One should note that there is a possibility to couple hot, cold heat exchanger and segments under regeneration into a one-pump system, without need of specially designed valves.

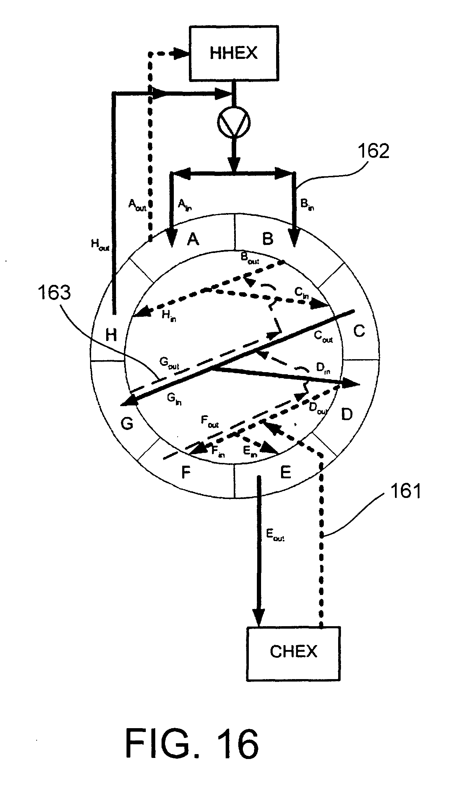

One among many possible connections for a "one pump" solution is presented in a Figure 16. One should note that connections are not showing exact direction of the fluid flow, but only the principle of a process. The fluid flow connection of the bottom side is designated by reference 161, the fluid flow connection of the top side is designated by reference 162 and the fluid flow connection of the regenerated side is designated by reference 163.

According to Figure 16. which is a device for explanatory purpose, there are eight separated segments (not to be mistaken for flow separators) in the static part of the device (conduits). Segments are denoted by alphabets A-H. The entering fluid for each segment is denoted by index "in", and the leaving fluid from each segment is denoted by the index "out". CHEX and HHEX present cold (heat source) heat exchanger and hot (heat sink) heat exchanger respectively. The shaded area presents the influence of a magnetic field. The mass conservation law in this case requires following equalities:

$$\dot{m}_{Aout} + \dot{m}_{Hout} = \dot{m}_{Ain} + \dot{m}_{Bin}$$

$$\dot{m}_{Bout} + \dot{m}_{Gout} = \dot{m}_{Hin} + \dot{m}_{Cin}$$

$$\dot{m}_{Cout} + \dot{m}_{Fout} = \dot{m}_{Gin} + \dot{m}_{Din}$$

$$\dot{m}_{Dout} + \dot{m}_{CHEX} = \dot{m}_{Fin} + \dot{m}_{Ein}$$

and for each segment: $m_{out} = m_{in}$

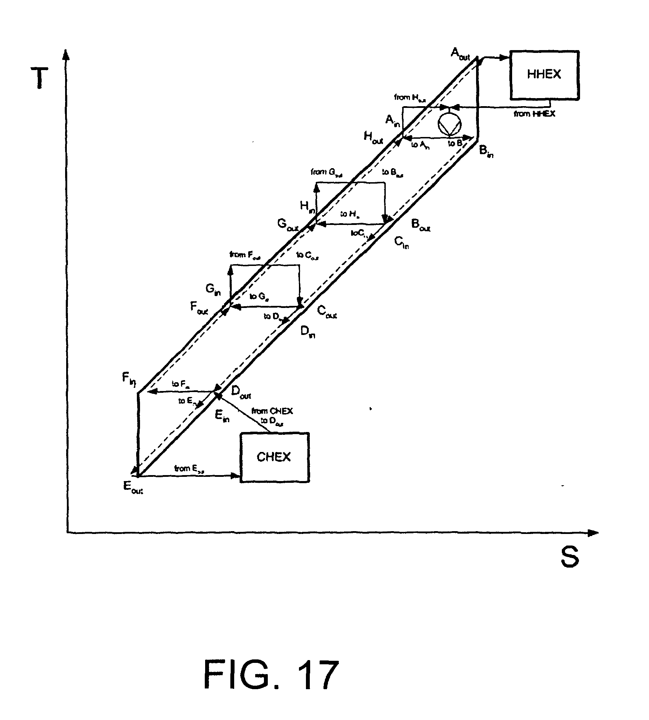

Figure 17 presents a T-S diagram, corresponding to the solution presented in Figure 16. For this case, a kind of a Brayton cycle is presented. However the supply of fluids at the same temperature to the segment in the field and the following segment out of the field could lead to an Ericcson-like cycle. Dashed lines present the temperature level of the fluid, while solid lines present the magnetocaloric material's temperature and thin solid lines present connections.

With this invention a new type of magnetic refrigerator (heat pump) is presented. Basically it operates according to the principle of a magnetocaloric ring rotating through a magnetic field. Customizations of the device allow for it to be operated in different thermodynamic cycles, and in system modes such as cascade systems or systems with regeneration. The device can be applied in industrial thermal processes, HVAC systems, refrigerators, heat pumps, automobiles, trains, planes, spacecrafts, and others.

The working fluids enter the device parallel to the rotating axis, then they pass through a rotating disc with a lower and upper internal circular array of hollow sectors which enable the flow of the heat source or heat sink fluid into and out of the magnetocaloric ring, and finally they leave the device again parallel to the rotating axis. Thus the invention enables a fluid flow which is temporally and spatially uninterrupted.

**Claims**

1. Continuously rotary magnetic refrigerator or heat pump (10) comprising at least one partially hollow rotating magnetocaloric ring member (12), at least one magnetic device (11) provided for generating a predetermined magnetic field, said rotating magnetocaloric ring member (12) rotating through the said predetermined magnetic field, and a working fluid conducting subassembly (13) for conducting the said working fluid in and out of the hollow rotating magnetocaloric ring member (12), **characterized in that** the working fluid conducting subassembly (13) comprises a central rotating disk (14) for supporting the said partially hollow rotating magnetocaloric ring member (12) which comprises at least two hollow sectors having respectively one inlet and one outlet and means to communicate with hollow sectors of the said partially hollow rotating magnetocaloric ring member (12).

2. Continuously rotary magnetic refrigerator or heat pump (10) according to claim 1, **characterized in that** the fluid conducting subassembly (13) comprises a horizontally positioned rotating disc (14) being frame-suspended with bearings (15 and 16) in stationary ducts above (17) and below (18).

3. Continuously rotary magnetic refrigerator or heat pump (10) according to claim 1, **characterized in that** the magnetocaloric ring member (12) comprises at least one fluid flow separator.

4. Continuously rotary magnetic refrigerator or heat pump (10) according to claim 1, **characterized in that** the said rotating disc (14) comprises at least one fluid flow separator which provides flow of at least one fluid in and out of the rotating magnetocaloric ring member (12) which is attached to the rotating disc (14).

5. Continuously rotary magnetic refrigerator or heat pump (10) according to claim 1, **characterized in that** it comprises stationary ducts (17, 18) attached to a casing containing the said rotating magnetocaloric ring member (12) and the said rotating disc (14).

6. Continuously rotary magnetic refrigerator or heat pump (10) according to claim 1, **characterized in that** the stationary ducts comprise minimum one fluid flow separator.

7. Continuously rotary magnetic refrigerator or heat pump (10) according to claim 1, **characterized in that** the magnetocaloric ring may be made of at least one magnetocaloric material.

8. Continuously rotary magnetic refrigerator or heat pump (10) according to claim 7, **characterized in that** the magnetocaloric ring may be layered with different magnetocaloric materials in a direction of a temperature gradient.

9. Continuously rotary magnetic refrigerator or heat pump (10) according to claim 1, **characterized in that** the magnetocaloric material is performed as a porous structure, packed bed, as periodic structure.

10. Continuously rotary magnetic refrigerator or heat pump (10) according to claim 1, comprising more than one partially hollow rotating magnetocaloric ring member (12), and at more than one magnetic device (11) provided for generating a predetermined magnetic field providing a cascade system having several stages, **characterized in that** each stage comprise different magnetocaloric material and/or may be also layered in a direction of a temperature gradient.

11. Continuously rotary magnetic refrigerator or heat pump (10) according to claim 1, **characterized in that** a highly magnetic permeable fluid is inserted between magnetocaloric ring member (12) and a housing in order to decrease the effect of a gap.

FIG. 1A

FIG. 1B

FIG. 2

FIG. 3A

FIG. 3B

FIG. 3C

# FIG. 4B

14   12

# FIG. 4C

14   40   41

12

14

12

B

B

A   A

27

# FIG. 4A

# FIG. 5A

# FIG. 5B

41

41

41

# FIG. 5C

41

# FIG. 5D

17a

17

17b

FIG. 6B

61

62

64

63

A

A

FIG. 6A

FIG. 7

FIG. 8

FIG. 9

FIG. 10

14

III. IV.

II. I.

# FIG. 11

FIG. 12

EP 1 736 719 A1

FIG. 13

10

10

10

# FIG. 14

FIG. 15A

FIG. 15B

FIG. 16

FIG. 17

**European Patent Office**

**EUROPEAN SEARCH REPORT**

Application Number

EP 05 40 5393

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 5 249 424 A (DEGREGORIA ET AL) 5 October 1993 (1993-10-05) * column 2, line 57 - column 3, line 53 * | 1-7,10 | F25B21/00 |
| Y | * column 11, line 27 - column 14, line 2; figures 12-16 * | 8,9,11 | |
| Y | WO 2004/059221 A (ECOLE D'INGENIEURS DU CANTON DE VAUD; KITANOVSKI, ANDREJ; EGOLF, PETER) 15 July 2004 (2004-07-15) * page 14, line 8 - page 17, line 25; figures 4-10,12 * | 8,9 | |
| Y | PATENT ABSTRACTS OF JAPAN vol. 004, no. 029 (M-002), 14 March 1980 (1980-03-14) -& JP 55 002872 A (HITACHI LTD), 10 January 1980 (1980-01-10) * abstract * | 11 | |
| A | PATENT ABSTRACTS OF JAPAN vol. 1996, no. 02, 29 February 1996 (1996-02-29) -& JP 07 259724 A (SHARP CORP), 9 October 1995 (1995-10-09) * abstract; figures 1-8 * | 1-7 | TECHNICAL FIELDS SEARCHED (IPC) F25B |
| A | EP 0 052 177 A (WABCO WESTINGHOUSE FAHRZEUGBREMSEN GMBH) 26 May 1982 (1982-05-26) * page 2, lines 11-24 * * page 5, lines 6-28; claim 1 * | 11 | |
| A | WO 02/12800 A (ASTRONAUTICS CORPORATION OF AMERICA) 14 February 2002 (2002-02-14) * figures 1-3,7-14 * * abstract * | 1-7 | |

-/--

The present search report has been drawn up for all claims

| Place of search | Date of completion of the search | Examiner |
|---|---|---|
| The Hague | 17 January 2006 | Léandre, A |

**European Patent Office**

**EUROPEAN SEARCH REPORT**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | DE 38 43 065 A1 (LINDE AG, 6200 WIESBADEN, DE) 28 June 1990 (1990-06-28)<br>* column 3, lines 32-68; figures 1a,1b *<br>----- | 10 | |

TECHNICAL FIELDS SEARCHED (IPC)

The present search report has been drawn up for all claims

| Place of search | Date of completion of the search | Examiner |
|---|---|---|
| The Hague | 17 January 2006 | Léandre, A |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

.............................................................................................
& : member of the same patent family, corresponding document

EPO FORM 1503 03.82 (P04C01)

**ANNEX TO THE EUROPEAN SEARCH REPORT
ON EUROPEAN PATENT APPLICATION NO.** EP 05 40 5393

This annex lists the patent family members relating to the patent documents cited in the above-mentioned European search report.
The members are as contained in the European Patent Office EDP file on
The European Patent Office is in no way liable for these particulars which are merely given for the purpose of information.

17-01-2006

| Patent document cited in search report | | Publication date | Patent family member(s) | | Publication date |
|---|---|---|---|---|---|
| US 5249424 | A | 05-10-1993 | CA | 2136533 A1 | 23-12-1993 |
| | | | DE | 69326694 D1 | 11-11-1999 |
| | | | DE | 69326694 T2 | 10-02-2000 |
| | | | EP | 0642648 A1 | 15-03-1995 |
| | | | JP | 7508092 T | 07-09-1995 |
| | | | JP | 3670659 B2 | 13-07-2005 |
| | | | JP | 2005069682 A | 17-03-2005 |
| | | | WO | 9325857 A1 | 23-12-1993 |
| WO 2004059221 | A | 15-07-2004 | AU | 2003286077 A1 | 22-07-2004 |
| | | | CA | 2511541 A1 | 15-07-2004 |
| | | | EP | 1581774 A1 | 05-10-2005 |
| JP 55002872 | A | 10-01-1980 | NONE | | |
| JP 07259724 | A | 09-10-1995 | NONE | | |
| EP 0052177 | A | 26-05-1982 | DE | 3043274 A1 | 01-07-1982 |
| WO 0212800 | A | 14-02-2002 | AU | 8642601 A | 18-02-2002 |
| | | | BR | 0113171 A | 24-06-2003 |
| | | | CN | 1468357 A | 14-01-2004 |
| | | | EP | 1307692 A1 | 07-05-2003 |
| | | | JP | 2004506168 T | 26-02-2004 |
| DE 3843065 | A1 | 28-06-1990 | NONE | | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 4069028 A
- US 5743095 A
- US 6526759 B
- US 3108444 A

- JP 2001090953 A
- WO 03050456 A
- WO 0212800 A

**Non-patent literature cited in the description**

- Magnetic heat pumping near room temperature. *J. App. Phys.,* 1976, vol. 47, 3673-3680
- **PECHARSKY VK ; GSCHNEIDNER JR. KA.** Effect of Alloying on the Giant Magnetocaloric Effect of Gd5(Si2Ge2), J. *Magnetism and Magnetic Materials,* 1997, vol. 167, 179-184
- **BRÜCK E ; TEGUS O ; LI XW ; DE BOER FR ; BUSCHOW KHJ.** Magnetic refrigeration-towards room-temperature applications. *Physica B,* 2003, vol. 327, 431-437
- **WADA H ; TAMABE Y.** Giant magnetocaloric effect of MnAs1-xSb. *Appl. Phy. Lett.,* 2001, vol. 79 (20), 3302-3304
- **YU BF ; GAO Q ; ZHANG B ; MENG XZ ; CHEN Z.** Review on research of room temperature magnetic refrigeration. *International Journal of Refrigeration,* 2003, vol. 26, 1-15
- The Magnetocaloric Effect and its Applications, Institute of Physics. **TISHIN AM ; SPICHKIN YI.** Series in Condensed Matter Physics. Institute of Physics Publishing, 2003

- Magnetic Refrigeration. Intermetallic Compounds. **GSCHNEIDNER KA ; PECHARSKY VK.** Principles and Practice. John Wiley&Sons, 2002, vol. 3, 519-539
- **K.H. MÜLLER ; G. KRABBES ; J. FINK ; S. GRUSS ; A. KIRCHNER ; G. FUCHS ; L. SCHULTZ.** New permanent magnets. *Journal of Magnetism and Magnetic Materials,* 2001, vol. 226-230, 1370-1376
- The Magnetocaloric Effect and its Applications. **A.M. TISHIN ; Y.I. SPICHKIN.** Institute of Physics, Series in Condensed Matter Physics. Institute of Physics Publishing, 2003
- **YU B.F. ; GAO Q. ; ZHANG B. ; MENG X.Z. ; CHEN Z.** Review on research of room temperature magnetic refrigeration. *International Journal of Refrigeration,* 2003, vol. 26, 1-15